# EUROPEAN PATENT SPECIFICATION

(11) **EP 0 692 074 B1**
(45) Date of publication and mention of the grant of the patent: **05.03.1997**
(21) Application number: 93907545.3
(22) Date of filing: 17.03.1993
(51) Int. Cl.: F04C 29/08, F04C 18/02

(54) **SCROLL GAS COMPRESSION APPARATUS**
SPIRALARTIGE GASVERDICHTUNGSANLAGE
DISPOSITIF DE COMPRESSION DES GAZ A SPIRALES

(43) Date of publication of application: 17.01.1996
(73) Proprietor: ALLIANCE COMPRESSORS INC., Tyler, TX 75711 (US)
(72) Inventor: RIFFE, Delmar, R., Cullman, AL 35055 (US); KOTLAREK, Peter, A., Onalaska, WI 54650 (US); UTTER, Robert, E., Whitehouse, TX 75791 (US)
(74) Representative: Abbie, Andrew Kenneth
(86) International application number: US9302413
(87) International publication number: WO9421922

(56) References cited:
- DE-A- 3 701 447
- FR-A- 980 737
- FR-A- 2 149 014
- US-A- 4 418 663

## Description

This invention relates to a scroll gas compression apparatus having a suction pressure portion into which gas enters for compression, comprised of:
a first scroll member having a first scroll end plate from which a first scroll wrap extends; and
a second scroll member having a second scroll end plate from which a second scroll wrap extends, said first and said second scroll members cooperating to compress said gas when said apparatus is in operation.

An object of the invention is to improve the operating efficiency of such a scroll apparatus and this is achieved by providing the apparatus with means for increasing the pressure of said gas with respect to the pressure at which said gas enters said suction pressure portion and prior to the operation of said first and said second scroll members on said gas to increase the pressure thereof. In accordance with the invention said means for increasing the pressure of said gas substantially encloses said first scroll wrap and said second scroll wrap so as to define a generally enclosed and substantially discrete intermediate space within said suction pressure portion and defines an aperture for permitting the flow of said gas into said intermediate space and a vane adjacent said aperture for forcing said flow of gas through said aperture into said intermediate space so that the pressure of gas in said intermediate space is greater than the pressure of the gas which enters said suction pressure portion.

EP-A-0482209 cited during examination by the EPO discloses a scroll gas compression apparatus as defined in the last but one paragraph in which a tubular member which is fixed to the end plate of its driven scroll member, together with a limit plate for limiting axial movement of the other scroll member fitted to the tubular member form a means substantially enclosing the scroll wraps so as to define a generally enclosed and substantially discrete intermediate space within said suction pressure portion. The tubular member is illustrated with apertures which permit the flow of gas into the intermediate space, but no vanes are provided adjacent these apertures for forcing the flow of gas therethrough so that the pressure of gas in the intermediate space is greater than the pressure of the gas which enters said suction pressure portion in the manner of the present invention.

In the present invention, preferably said means for increasing the pressure of said gas is rotatably disposed within said suction pressure portion.

More preferably, said means for increasing the pressure of said gas comprises a precharging device secured to said first scroll member for rotation therewith.

The precharging device may define a plurality of said apertures and has a plurality of said vanes disposed thereon for interaction with said gas, in use.

Advantageously, the precharging device may further comprise means for transmitting torque between said first scroll member and said second scroll member. The means for transmitting torque may further comprise means for sealing said intermediate space to prevent fluid flow therefrom other than to said scroll wraps. The preferred torque transmitting means includes a bellows type element, which has the advantage of being radially inflexible to permit transfer of torque, while being laterally flexible to accommodate the orbital motion generated by the offset of the scroll member axes and axially flexible to permit compliant axial movement of the scroll end plates.

Advantageously, the precharging device may further include means for biasing said second scroll end plate toward said first scroll end plate. The biasing means which may be a coil spring provides additional axial compliance between the respective scroll end plates. However, axial compliance is preferably accomplished by providing suitable fluid pressure on the ends of the drive shaft supporting the first scroll end plate and of the idler shaft supporting the second scroll end plate or upon the end plates of the respective scroll members.

At least a portion of each vane may extend into said intermediate space, or alternatively at least a portion of each vane may be disposed outwardly of said intermediate space.

In order that the invention may be well understood, some embodiments thereof which are given by way of example only, will now be described with reference to the accompanying drawings, in which:
Figure 1 shows in schematic representation a refrigeration system in which the scroll apparatus of the subject invention may be suitably employed;
Figure 2 shows a cross-sectional view of the scroll apparatus as shown in Figure 1 according to the present invention;
Figure 3 shows an enlarged view of the cross-sectional view of the scroll apparatus according to the present invention as shown in Figure 2;
Figure 4 shows a cross-sectional view of the scroll apparatus as shown in Figure 3 taken along the section line 4-4;
Figure 5 shows a cross-sectional view of an alternative embodiment of the drive housing according to the present invention;
Figure 6 shows a cross-sectional view of a first alternative embodiment of the drive housing of the precharging device according to the present invention;
Figure 7 shows a cross-sectional view of a second alternative embodiment of the drive housing of the precharging device according to the present invention;
Figure 8 shows a cross-sectional view of a third alternative embodiment of the drive housing of the precharging device according to the present invention.
Figure 9 shows a fourth alternative embodiment of the drive housing of the precharging device in the scroll apparatus according to the present invention.

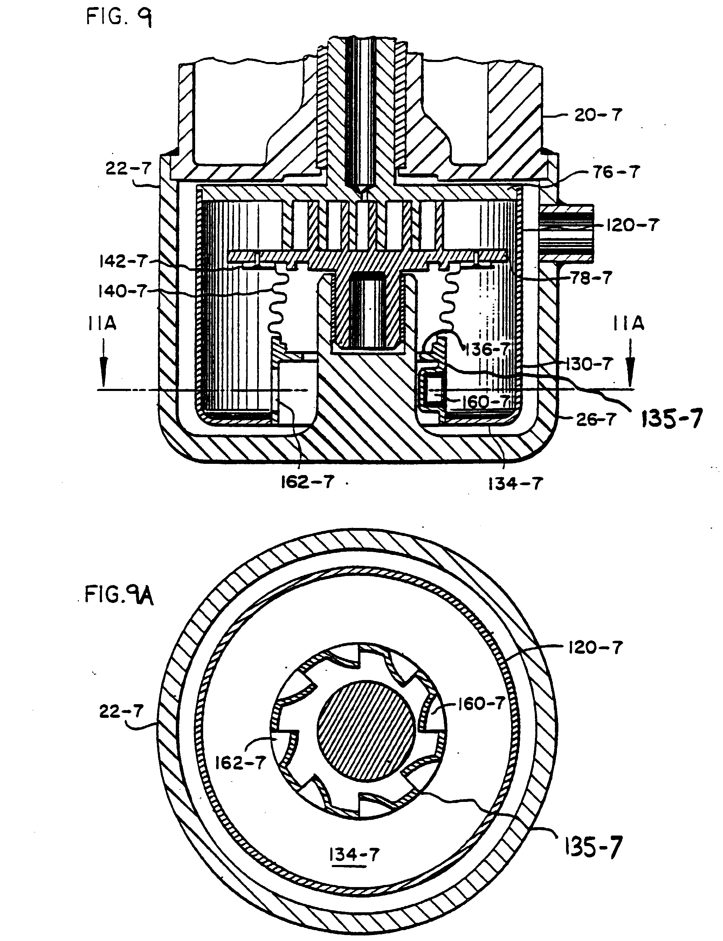

Figure 9A shows a cross-sectional view of the fourth alternative embodiment of the drive housing of the precharging device taken along the section line 11-11 of Figure 11; and
Figure 10 shows another alternative of the scroll apparatus according to the present invention.

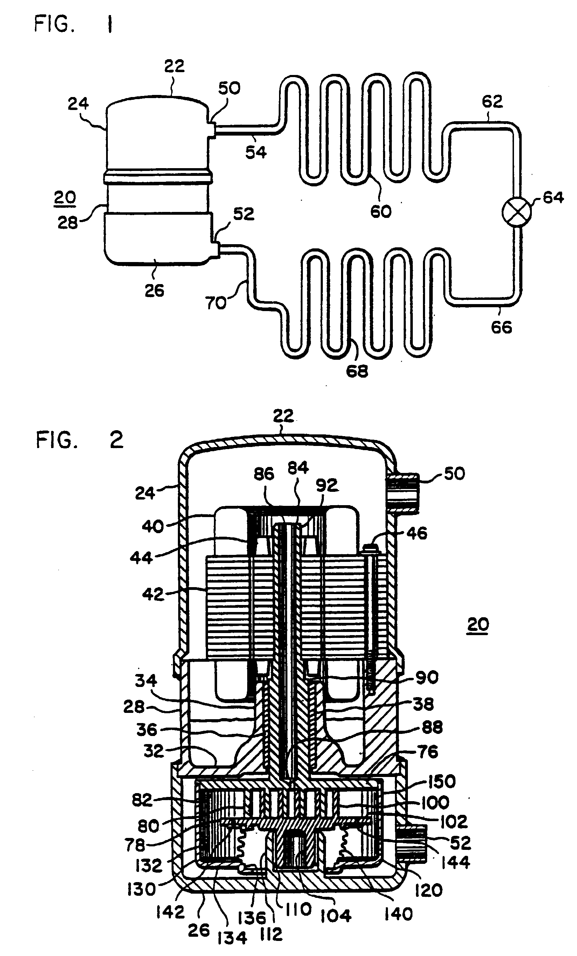

A scroll gas compression apparatus generally shown in Figure 1 is indicated by reference numeral 20. As the preferred embodiment of the subject invention is a hermetic scroll compressor assembly, the scroll apparatus 20 is interchangeably referred to as a scroll compressor 20 or as a compressor assembly 20. It will be readily apparent that the features of the subject invention will lend themselves equally readily to use in scroll apparatus which are not of the hermetic type.

In the preferred embodiment, the compressor assembly 20 includes a hermetic shell 22 having an upper portion 24, a lower portion 26, and an intermediate, central frame portion 28. A discharge aperture 50 is shown in the upper shell portion 24 for discharging high pressure fluid from the scroll apparatus 20, and a shell suction aperture 52 is shown disposed generally in the lower end of the lower end portion 26 for receiving low pressure fluid into the scroll apparatus 20. In Figure 1, the scroll compressor assembly 20 is shown connected at the discharge aperture 50 and the suction aperture 52 to a fluid system such as generally is used in refrigeration or air conditioning systems. Those skilled in the art will appreciate that this is but one fluid system in which the scroll compressor assembly 20 could suitably be utilized, and that application of the scroll compressor assembly 20 in refrigeration and air conditioning systems is to be taken as exemplary rather than as limiting.

The refrigeration system, shown generally in schematic representation in Figure 1 in connection with the scroll compressor assembly 20, includes a discharge line 54 connected between the shell discharge aperture 50 and a condenser 60 for expelling heat from the refrigeration system and in the process typically condensing the refrigerant from vapor form to liquid form. A line 62 connects the condenser 60 to an expansion device 64. The expansion device 64 may be a thermally actuated or electrically actuated valve operated by a suitable controller (not shown), a capillary tube assembly, or other suitable means of expanding the refrigerant in the system. Another line 66 connects the expansion device 64 to an evaporator 68 for transferring expanded refrigerant from the expansion device 64 to the evaporator 68 for the acceptance of heat and typically the evaporation of the liquid refrigerant to a vapor form. Finally, a refrigerant system suction line 70 transfers the evaporated refrigerant from the evaporator 68 to the compressor assembly 20, wherein the refrigerant is compressed and returned to the refrigeration system.

It is believed that the general principles of refrigeration systems capable of using suitably a scroll compressor apparatus 20 are well understood in the art, and that further detailed explanations of the devices and mechanisms suitable for constructing such a refrigeration system need not be discussed in detail herein. It is believed that it will also be apparent to those skilled in the art that such refrigeration or air conditioning systems may include multiple units of the compressor assembly 20 in parallel or series type connection, as well as multiple condensers 60, evaporators 68, or other components and enhancements such as subcoolers and cooling fans and so forth as are believed known in the art.

Turning now to Figure 2, the general construction of the scroll apparatus 20 is generally disclosed. The central frame portion 28 is defined by a generally cylindrical exterior shell 30 having a central frame portion 32 disposed there across, preferably at the lower end. Integral with the central frame portion 32 is a generally cylindrical upper bearing housing 34, which is approximately co-axial with the axis of the exterior shell portion 30. A drive shaft aperture 36 extends axially through the center of the upper bearing housing 34, and an upper main bearing 38 is disposed radially within the drive shaft aperture 36. Preferably, the upper main bearing 38 is made, for example, of sintered bronze or similar material, but may also alternatively be a roller or ball-type bearing, for accepting a rotating load therein.

A motor 40 is disposed within the upper portion 24 and central shell portion 28 of the hermetic shell 22. The motor 40 is preferably a single-phase or three-phase electric motor comprised of a stator 42 which is circumferentially disposed about a rotor 44, with an annular space formed therebetween for permitting free rotation of the rotor 44 within the stator 42. A plurality of long bolts or cap screws 46 are provided through appropriate apertures in the stator plates into threaded apertures in the central shell portion 28 for securing the motor 48 within the hermetic shell 22. For clarity, only one of the long bolts 46 is shown.

It will be readily apparent to those skilled in the art that alternative types of motors 40 and means of mounting motor 40 would be equally suitable for application in the subject invention. For example, the stator 42 could be secured within the central shell portion 28 by a press fit therebetween.

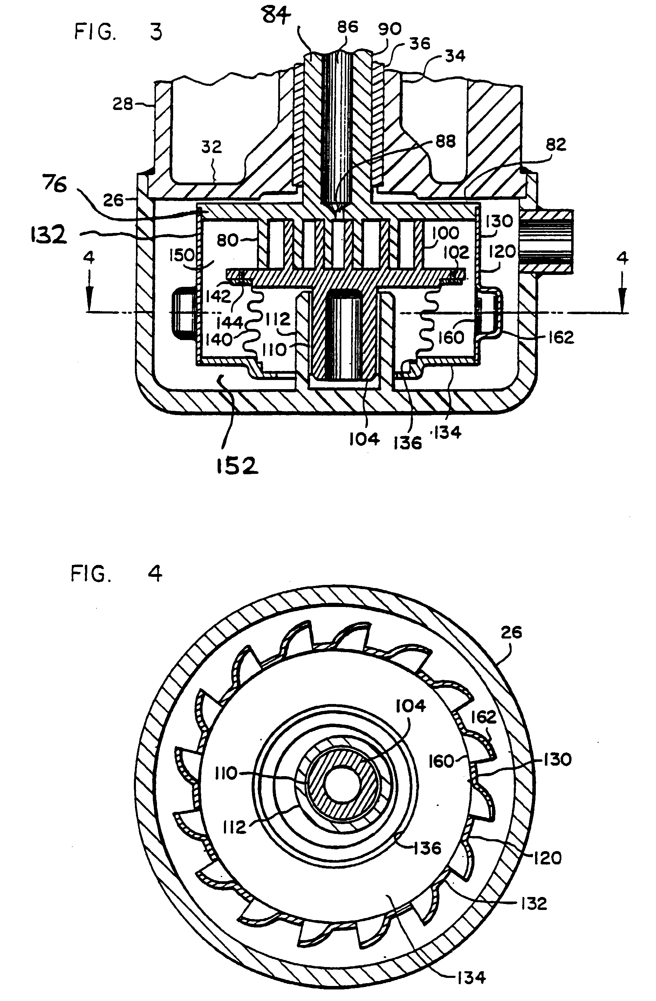

Referring again to the previously mentioned drawing figures and more particularly to Figure 3, a scroll arrangement is described in more detail. The scroll arrangement includes a first scroll member 76 and a second scroll member 78, each having an upstanding involute scroll wrap for interfitting engagement with the other respective scroll wraps. The first scroll member 76 includes an upstanding first involute scroll wrap 80 which is integral with a generally planar drive scroll end plate 82. The drive scroll end plate 82 includes a central drive shaft 84 extending oppositely the upstanding involute scroll wrap 80. A discharge gallery 86 is defined by bore extending centrally through the axis of the drive shaft 84. The discharge gallery 86 is in flow communication with a discharge aperture 88 defined by a generally central bore through the drive scroll end plate 82. The drive shaft 84 further includes a first, relatively large diameter portion 90 extending axially through the upper main bearing 38 for a free rotational fit therein, and a second relatively smaller diameter portion 92 which extends axially through the rotor 44 and is affixed thereto. The rotor 44 may be affixed to the rotor portion 92 of the drive shaft 84 by such means as a press fit therebetween or a power transmitting key in juxtaposed keyways.

The second or idler scroll member 78 includes a second, idler scroll wrap 100 which is disposed in interfitting contact with the driven scroll wrap 80. The idler scroll wrap 100 is an upstanding involute extending from an idler end plate 102. An idler stub shaft 104 extends from the idler end plate 102 oppositely the idler scroll wrap 100.

An annular bearing 110, which may be a sleeve bearing made of sintered bronze material, or may be of the roller or ball-type, is disposed within an annular wall defining an idler bearing housing 112 which is integral with the lower hermetic shell portion 26 for rotationally supporting the second or idler scroll member 78.

In the preferred embodiment, the drive scroll end plate 82 has a larger diameter than the idler scroll end plate 102, permitting a precharging device 120 to be secured to the drive scroll end plate 82. The precharging device 120 is preferably comprised of two components, the first being a drive housing 130. The drive housing 130 is a cup shaped component, having a generally cylindrical exterior portion 132 secured at one end to the drive scroll end plate 82, and extending past the drive scroll wrap 80, the idler scroll wrap 100 and the idler scroll end plate 102 to substantially enclose those components. The cylindrical portion 132 of the drive housing then joins a generally planar base portion 134, which is provided with a generally central aperture 136 so that the base portion 134 extends annularly about the idler bearing housing 112.

A connecting element 140 is connected to the base portion 134 of the drive housing 130 and extends generally from the central aperture 136 to the idler scroll end plate 102 to make a sealing contact therewith. In the preferred embodiment, the connecting element 140 is also secured to the idler scroll end plate 102 by an annular clamping ring 142 and a plurality of screws 144 which extend through holes in the clamping ring 142 into suitable apertures in the idler scroll end plate 102. In this case, when the material selected for the connecting element 140 is relatively flexible axially and relatively inflexible radially, the connecting element 140 acts as a means for transmitting torque from the drive scroll end plate 82 to the idler scroll end plate 102, and hence permits the precharging device 120 to be employed as a suitable drive means to drivingly couple the scroll elements 76 and 78.

The drive scroll end plate 82, the drive housing 130, the connecting element 140, and the idler scroll end plate 102 act together to form an intermediate chamber , or space, 150 within the suction pressure portion 152 defined in the compressor assembly 20 by the lower hermetic shell portion 26 and the central frame portion 32. A plurality of apertures 160 are provided in the drive housing 130 to permit the passage of fluid from the suction pressure portion thus defined into the intermediate chamber 150. As the connecting element 140 is secured to the end plate 102 as described above, the intermediate chamber 150 is sealed to prevent fluid flow therefrom other then to the scroll wraps. Adjacent each of the apertures 160 is a corresponding vane 162. In the preferred embodiment, the vanes 162 are directed outwardly from the cylindrical portion 132 of the precharging device 130.

It will be appreciated by those skilled in the art that the number and size of the apertures 160 as well as the size and extension of the vanes 162 will be determined by the amount of fluid which is to be moved into the intermediate chamber 150, as well as the speed of rotation and pressure differential from the suction aperture 52 to the intermediate chamber 150, and hence will be unique for any given size or application of the scroll apparatus 20. Those skille, in the art will also understand that only one aperture 160 is required for fluid flow. However, it is preferable that the apertures 160 and corresponding vanes 162 would number at least two and would be evenly distributed about the drive housing 132 of the precharging device 120.

As shown in Figure 3, the vanes 162 are preferably formed integrally with the drive housing 130 and are connected to the edges of the apertures 160. This may be accomplished, for example, by die-press operation in the case where the drive housing 130 is metal, or by molding or casting where the drive housing 130 is formed of iron, plastic or other moldable or castable material. In the preferred embodiment, the vanes 162 extend radially outward from the drive housing 130 as shown in Figure 4. Thus at least a portion of each vane is radially outwardly disposed with respect to the precharging device 120 whereby at least a portion of each vane is outwardly disposed of the intermediate chamber 150. In this configuration, the vanes 162 act to direct a flow of fluid into the intermediate chamber 150 when the rotation of the drive housing 130 is in the clockwise direction as seen in Figure 4. Clockwise rotation is assumed herein for all embodiments, and is descriptive only, rather than limiting, since reversing the direction of rotation requires reversing the orientation of the vanes 162.

It should be noted that when the same part of feature is shown in more than one of the figures, it will be labeled with the corresponding reference numeral to aid in the understanding of the subject invention. Furthermore, reference should be had to all of the figures necessary to aid in the understanding of the subject invention even where a particular figure is referred to, as all reference numerals are not displayed in all figures in order to minimize confusion. When the same part or feature appears in a figure representing or disclosing an alternative embodiment of that part or feature, it is again labeled with the same reference numeral, followed by a numeric suffix. The numeric designation of the alternate embodiment does not correspond to its preference but rather is intended to aid in the understanding of the subject invention.

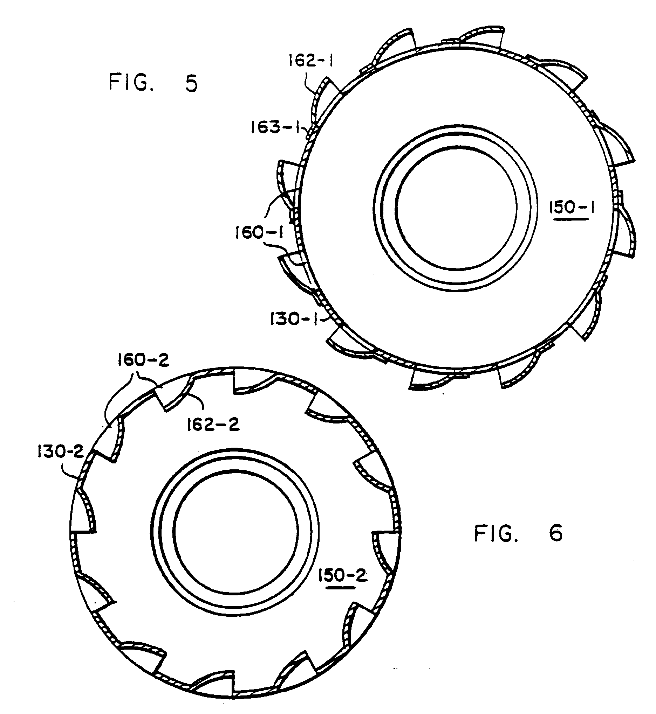

As shown in Figure 5, the vanes 162-1 may be separately manufactured, and applied and secured to the drive housing 130-1 adjacent the corresponding apertures 160-1 by such means as welding or the application of an adhesive between a tab 163-1 and the drive housing 130-1.

While in the preferred embodiment, the vanes 162 are shown directed outwardly, and the apertures 160 are shown formed in the cylindrical portion 132, there are several alternative embodiments of the drive housing 130 which may be equally suitably employed in the scroll apparatus 20. These are shown in Figures 6 through 9. In Figure 6, the drive housing 130-2 provided with a plurality of apertures in the cylindrical portion 132-2, just as in the preferred embodiment. However, the vanes 162-2 are directed inwardly and reversed in orientation from those of the preferred embodiment to create a centrifugal fan effect to draw fluid into the intermediate chamber 150-2. Thus at least a portion of each vane 162-2 is radially inwardly disposed with respect to the precharging device 120 whereby at least a portion of each vane 162-2 extends into the intermediate chamber 150.

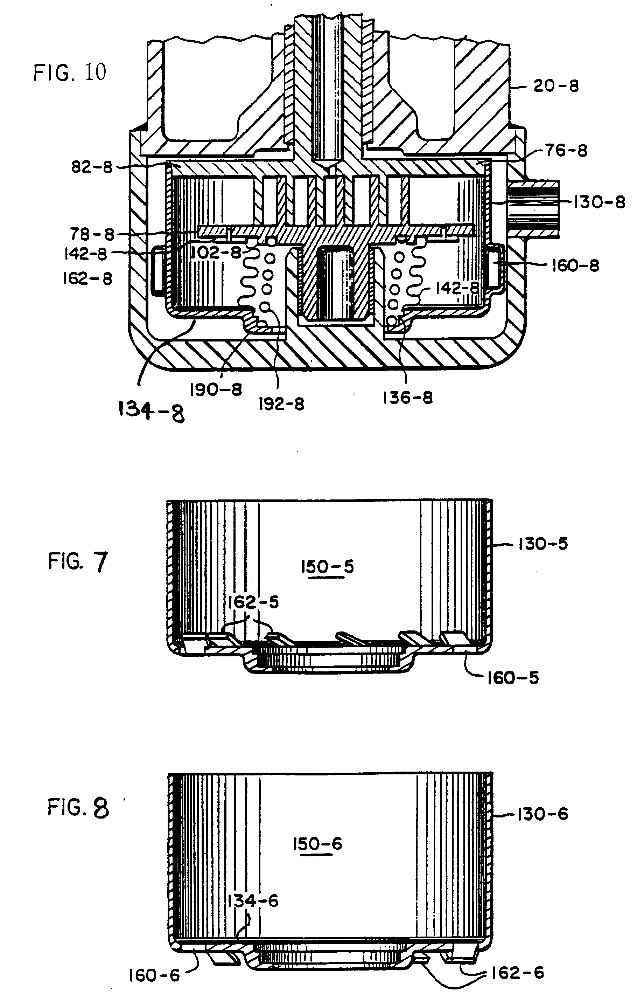

In Figure 7, a plurality of apertures 160-5 and corresponding vanes 162-5 are provided in the base portion 134-5 of the drive housing 130-5. In this alternative embodiment, the vanes 162-5 are also directed inwardly, creating a vane-axial fan effect to draw fluid into the intermediate chamber 150-5. In another alternative embodiment of the drive housing 130-6, shown in Figure 8, the apertures 160-6 are again provided adjacent the periphery of the base portion 134-6, with the vanes directed outwardly from the drive housing 130-6, again creating a vane-axial fan effect to draw fluid into the intermediate chamber 150-6, as well as assisting in the movement of any fluid which may be trapped in the suction portion into the scroll assembly.

Figure 9 discloses an alternative embodiment of the drive housing 130-7 as embodied in a scroll apparatus 20-7 in which the lower portion 26-7 of the hermetic shell 22-7 is extended in length relative to that as shown in the preferred embodiment. Similarly, the drive housing 130-7 is extended so that an inner diameter portion 135-7 extends between the base portion 134-7 and the wall defining the central aperture 136-7. In the inner diameter portion 135-7 are disposed the apertures 160-7 and vanes 162-7. A cross-sectional view of this embodiment is disclosed in Figure 9A.

An alternative embodiment of the drive housing 130-8 may be employed in which the annular base portion 134-8 of the drive housing 130-8 further includes an inwardly disposed support portion 190-8. The support portion 190-8 is comprised of a depressed annular portion adjacent the edge defining the aperture 136-8. A biasing means 192-8, such as a coil spring is disposed with one end in contact with the idler scroll end plate 102-8, and the other end disposed in the annular support ring 190-8. This is as shown in Figure 10. The spring or biasing means 192-8 is precompressed during assembly of the scroll apparatus 20-8 to provide a desired biasing force which acts on the respective scroll end plates 82-8 and 102-8 through the drive housing 130-8 to bias the respective scroll elements 76-8 and 78-8 toward each other. This biasing effect prevents separation of the scroll elements during normal operation of the scroll apparatus, but permits axial compliance so that the scroll elements 76-8 and 78-8 may separate temporarily to permit the passage of fluid or foreign matter therethrough without damage.

Those skilled in the art will recognize that biasing means 192 may be employed in scroll apparatus according to the preferred embodiment, Figures 2-4, and in scroll apparatus embodying each of the alternative embodiments of the drive housing 130 as shown in Figures 5-8. For this reason, the support portion 190 is shown in each embodiment. However, where the use of the biasing means 192 is not contemplated or is undesirable for any reason, the support portion 190 may be deleted from the drive housing 130.

Although there are slight differences in the operation of the alternative embodiments described above, the operation of a scroll apparatus 20 embodying any of the alternative embodiments is substantially as described below for the preferred embodiment.

In operation, the motor 40 of the compressor assembly 20 is connected to an appropriate electrical supply and actuated to cause rotation of the rotor 44. The rotor 44 in turn rotates the drive shaft 84, driving the drive scroll end plate 82. The precharging device 120 is rotated therewith, so that the drive housing 130 rotates concurrently with the drive scroll end plate 82. The connecting element 140, being relatively radially inflexible, transmits the torque generated through the drive housing 130 to the idler scroll end plate 102 to cause concurrent rotation of the idler scroll end plate 102 with the drive scroll end plate 82.

The drive shaft 84 and the idler shaft 104 rotate about parallel, nonconcentric axes, and establish therefore a relative orbital motion between the driven scroll wrap 80 and the idler scroll wrap 100. This creates a plurality of chambers between the respective scroll wraps 80 and 100. These chambers are of decreasing volume toward the radially inward ends of the respective scroll wraps 80 and 100, such that fluid is drawn into the chambers as they form at the radially outward ends of the respective scroll wraps 80 and 100 and compressed as it is moved toward the radially inward ends thereof. The compressed fluid is then discharged from the scroll wraps through the discharge aperture 88 and thence through the discharge gallery 86 into the discharge pressure portion of the hermetic shell defined in the upper shell portion 24.

With regard to the general construction of the scroll apparatus 20, those skilled in the art will appreciate that it would be readily possible to reverse the roles of the idler scroll member 78 and drive scroll member 76 by attaching the motor 40 to the idler shaft stub 104 without substantially altering the function or design of the scroll apparatus 20. It would be possible to construct the connecting element 140 from any suitable plastic, rubberoid, or metallic material capable of providing suitable axial and lateral elasticity and flexibility so as to permit axial movement and compliance of the scroll element 76 and 78 while providing relative torsional or radial rigidity to pass torque between the scroll members 76 and 78. Those skilled in the art, however, will readily recognize that alternative means could be employed to cause concurrent rotation of the scroll end plates 82 and 102 without effecting the function of the drive housing 130 as a precharging device. Since in operation the precharging device rotates concurrently with the drive scroll end plate 82, the vanes 162 serve to direct fluid through the apertures 160 and into the intermediate chamber 150 as a result of the rotation of the drive housing 130 and independently of any other functions it may perform.

The scroll apparatus 20 is a substantial improvement over the prior art of co-rotational scroll apparatus. The precharging device 120 rotates with the scroll elements 76 and 78 and takes advantage of this rotation to induce a prepressurization due to the fan effect of vanes 162, increasing the pressure at which the fluid enters the scroll wraps 80 and 100. Furthermore, since the precharging device 120 presents a relatively smooth exterior, with the exception of the vanes 162 and apertures 160, the tendency of the incoming suction pressure fluid to be induced into a rotary motion is reduced, reducing the amount of lubricant which is precipitated from the incoming suction pressure fluid and improving the lubrication of the scroll apparatus 20.

The precharging device 120 further serves to transfer the driving torque from the drive scroll 76 to the. idler scroll 78 with a minimum of components and is therefore extremely inexpensive to construct and maintain. Furthermore, the precharging device 120 permits substantial axial compliance of the scroll end plates 82 and 102 to permit ready passage of incompressible fluids and foreign matter. Finally, due to the large variety of axial pressure balancing arrangements available at discharge or at an intermediate pressure, the scroll apparatus 20 is extremely easy to adapt to a large variety of operating conditions and is suitable for use in a large number of varying types of compressor uses. It will be therefore appreciated that the scroll apparatus 20 is a simple, reliable and efficient scroll apparatus, and is substantial more cost effective in construction and maintenance than previous scroll apparatus.

Modifications to the preferred and alternate embodiments of the subject invention will be apparent to those skilled in the art within the scope of the claims.

## Claims

1. Scroll gas compression apparatus (20), having a suction pressure portion (152) into which gas enters for compression, comprised of:
a first scroll member (76) having a first scroll end plate (82) from which a first scroll wrap (80) extends;
a second scroll member (78) having a second scroll end plate (102) from which a second scroll wrap (100) extends, said first and said second scroll members cooperating to compress said gas when said apparatus is in operation; and
means (120) for increasing the pressure of said gas with respect to the pressure at which said gas enters said suction pressure portion and prior to the operation of said first and said second scroll members on said gas to increase the pressure thereof, said means for increasing the pressure of said gas substantially enclosing said first scroll wrap and said second scroll wrap so as to define a generally enclosed and substantially discrete intermediate space (150) within said suction pressure portion (152) and defining an aperture (160) for permitting the flow of said gas into said intermediate space and a vane (162) adjacent said aperture for forcing said flow of gas through said aperture into said intermediate space so that the pressure of gas in said intermediate space is greater than the pressure of the gas which enters said suction pressure portion.

2. A scroll gas compression apparatus according to claim 1, wherein said means (120) for increasing the pressure of said gas is rotatably disposed within said suction pressure portion (152).

3. A scroll apparatus according to claim 2, wherein said means for increasing the pressure of said gas comprises a precharging device (120) secured to said first scroll member (76) for rotation therewith.

4. A scroll apparatus according to claim 3 wherein said precharging device (120) defines a plurality of said apertures (160) and has a plurality of said vanes (162) disposed thereon for interaction with said gas, in use.

5. A scroll apparatus according to claim 3 or 4, wherein said precharging device (120) further comprises means (140) for transmitting torque between said first scroll member (76) and said second scroll member (78).

6. A scroll apparatus according to claim 5, wherein said means (140) for transmitting torque further comprises means (142, 144) for sealing said intermediate space (150) to prevent fluid flow therefrom other than to said scroll wraps (80, 100).

7. A scroll apparatus according to claim 5 or 6, wherein said precharging device (120) further includes means (192) for biasing said second scroll end plate (102) toward said first scroll end plate (82).

8. A scroll apparatus according to any one of the preceding claims, having a hermetic shell (22).

9. A scroll apparatus according to any one of the preceding claims wherein at least a portion of the each vane (162-2, 162-5, 162-7) extends into said intermediate space (152).

10. A scroll apparatus according to any one of claims 1 to 8, wherein at least a portion of the or each vane (162, 162-1, 162-6) is disposed outwardly of said intermediate space.

## Patentansprüche

1. Aufladungsanlage (20) für Spiralverdichter, mit einem Saugdruckabschnitt (152), in den Gas zum Verdichten eintritt, mit:
einem ersten Spiralteil (76) mit einer ersten Spiral-Endplatte (82), von der ein erster spiralförmig gewundener Steg (80) herausragt;
einem zweiten Spiralteil (78) mit einer zweiten Spiral-Endplatte (102), von der ein zweiter spiralförmig gewundener Steg (100) herausragt, wobei das erste und das zweite Spiralteil zum Verdichten des Gases zusammenarbeiten, wenn die Anlage in Betrieb ist; und
einer Vorrichtung (120) zur Druckerhöhung des Gases im bezug auf den Druck, mit dem das Gas in den Saugdruckabschnitt eintritt, und zur Druckerhöhung des Gases vor dem Einwirken des ersten und des zweiten Spiralteiles auf das Gas, wobei die Vorrichtung zur Druckerhöhung des Gases den ersten und den zweiten spiralförmig gewundenen Steg im wesentlichen einschließt, so daß ein im allgemeinen eingeschlossener und im wesentlichen abgeschlossener bzw. diskreter Zwischenraum (150) innerhalb des Saugdrucksabschnittes (152) gebildet ist, und eine Öffnung (160) zum Eintreten der Gasströmung in den Zwischenraum und eine Schaufel (162) bildet, die an der Öffnung angrenzend angeordnet ist, damit die Gasströmung durch die Öffnung in den Zwischenraum gezwungen wird, so daß der Gasdruck in dem Zwischenraum höher ist als der Druck des Gases, das in den Saugdruckabschnitt eintritt.

2. Aufladungsanlage für Spiralverdichter gemäß Anspruch 1, bei der die Vorrichtung (120) zur Druckerhöhung des Gases in dem Saugdruckabschnitt (152) drehbar angeordnet ist.

3. Aufladungsanlage gemäß Anspruch 2, bei der die Vorrichtung zur Druckerhöhung des Gases eine Vorladeeinrichtung (120) enthält, die an dem ersten Spiralteil (76) zum gemeinsamen Rotieren befestigt ist.

4. Aufladungsanlage gemäß Anspruch 3, bei der die Vorladeeinrichtung (120) eine Vielzahl der Öffnungen (160) bildet und eine Vielzahl der Schaufeln (162) besitzt, die daran angeordnet sind, um bei Gebrauch mit dem Gas in Wechselwirkung zu treten.

5. Aufladungsanlage gemäß Anspruch 3 oder 4, bei der die Vorladeeinrichtung (120) weiter eine Vorrichtung (140) zum Übertragen eines Drehmomentes zwischen dem ersten Spiralteil (76) und dem zweiten Spiralteil (78) aufweist.

6. Aufladungsanlage gemäß Anspruch 5, bei der die Vorrichtung (140) zum Übertragen des Drehmomentes weiter Vorrichtungen (142, 144) zum Abdichten des Zwischenraumes (150) aufweist, damit eine anderweitige Gasströmung daraus als zu den spiralförmig gewundenen Stegen (80, 100) verhindert wird.

7. Aufladungsanlage gemäß Anspruch 5 oder 6, bei der die Vorladeeinrichtung (120) weiter eine Vorrichtung (192) zum Vorspannen der zweiten Spiral-Endplatte (102) gegen die erste Spiral-Endplatte (82) enthält.

8. Aufladungsanlage gemäß einem der vorhergehenden Ansprüche, die eine hermetische Hülle (22) besitzt.

9. Aufladungsanlage gemäß einem der vorhergehenden Ansprüche, bei der zumindest ein Abschnitt jeder Schaufel (162-2, 162-5, 162-7) in den Zwischenraum (152) ragt.

10. Aufladungsanlage gemäß einem der Ansprüche 1 bis 8, bei der zumindest ein Abschnitt der oder jeder Schaufel (162, 162-1, 162-6) außerhalb des Zwischenraumes angeordnet ist.

## Revendications

1. Machine à volutes de compression de gaz (20), comprenant une partie (152) sous pression d'aspiration, dans laquelle le gaz entre pour être comprimé, se composant de :
un premier élément de volute (76) comportant une première plaque d'extrémité de volute (82) dont part un premier enveloppement de volute (80) ;
un second élément de volute (78) comportant une seconde plaque d'extrémité de volute (102) dont part un second enveloppement de volute (100), et lesdits premier et second éléments de volute coopérant pour comprimer ledit gaz lorsque ladite machine est en marche ; et
un moyen (120) d'élévation de la pression dudit gaz par rapport à la pression à laquelle ledit gaz entre dans ladite partie sous pression d'aspiration et avant l'action exercée par lesdits premier et second éléments de volute sur ledit gaz afin d'en élever la pression, ledit moyen d'élévation de la pression dudit gaz enfermant sensiblement ledit premier enveloppement de volute et ledit second enveloppement de volute de manière à constituer un espace intermédiaire globalement fermé et sensiblement indépendant (150) à l'intérieur de ladite partie sous pression d'aspiration (152) et comportant un trou (160) destiné à permettre l'écoulement dudit gaz dans ledit espace intermédiaire et une aube (162) voisine dudit trou pour refouler ledit écoulement de gaz dans ledit trou et dans ledit espace intermédiaire de façon que la pression du gaz dans ledit espace intermédiaire soit supérieure à la pression du gaz qui entre dans ladite partie sous pression d'aspiration.

2. Machine de compression de gaz à volutes selon la revendication 1, dans laquelle ledit moyen (120) d'élévation de la pression dudit gaz est disposé rotatif à l'intérieur de ladite partie sous pression d'aspiration (152).

3. Machine à volutes selon la revendication 2, dans laquelle ledit moyen d'élévation de la pression dudit gaz comprend un dispositif de mise sous charge initiale (120) fixé audit premier élément de volute (76) de manière à tourner avec lui.

4. Machine à volutes selon la revendication 3, dans laquelle ledit dispositif de mise sous charge initiale (120) comporte plusieurs desdits trous (160) et comprend plusieurs desdites aubes (162) disposées au-dessus de ceux-ci pour réagir en service avec ledit gaz.

5. Machine à volutes selon la revendication 3 ou 4, dans laquelle ledit dispositif de mise sous charge initiale (120) comprend par ailleurs un moyen (140) de transmission d'un couple entre ledit premier élément de volute (76) et ledit second élément de volute (78).

6. Machine à volutes selon la revendication 5, dans laquelle ledit moyen (140) de transmission d'un couple comprend par ailleurs des moyens (142, 144) pour fermer hermétiquement ledit espace intermédiaire (150) afin d'empêcher que du fluide en sorte par une voie autre que celle allant vers lesdits enveloppements de volute (80, 100).

7. Machine à volutes selon la revendication 5 ou 6, dans laquelle ledit dispositif de mise sous charge initiale (120) comprend par ailleurs un moyen (192) pour repousser ladite seconde plaque d'extrémité de volute (102) vers ladite première plaque d'extrémité de volute (82).

8. Machine à volutes selon l'une quelconque des revendications précédentes, comportant une enveloppe hermétique (22).

9. Machine à volutes selon l'une quelconque des revendications précédentes, dans laquelle au moins une partie de chaque aube (162-2, 162-5, 162-7) pénètre dans ledit espace intermédiaire (152).

10. Machine à volutes selon l'une quelconque des revendications 1 à 8, dans laquelle au moins une partie de l'aube ou de chaque aube (162, 162-1, 162-6) est disposée à l'extérieur dudit espace intermédiaire.
